# EUROPEAN PATENT APPLICATION

(11) **EP 4 718 305 A1**
(43) Date of publication of application: **01.04.2026**
(21) Application number: 25152958.2
(22) Date of filing: 20.01.2025
(51) Int. Cl.: G06F 21/64, H04L 9/00, G06Q 20/38, H04N 1/00

(54) **IMAGE LOG MANAGEMENT SYSTEM, IMAGE LOG MANAGEMENT PROGRAM, AND IMAGE LOG MANAGEMENT METHOD**

(30) Priority: 25.09.2024 JP 2024166019
(71) Applicant: FUJIFILM Business Innovation Corp., Minato-ku Tokyo (JP)
(72) Inventor: HONJO, Hiroki, Yokohama-shi (JP)
(74) Representative: Haseltine Lake Kempner LLP

(57) **Abstract**

An image log management system includes multiple devices that each store a block chain including a block having a transaction record including an image log that is an image datum representing a processing target datum, each execute a mining process for adding a new block to the block chain, and are connected to be able to communicate with each other, in which the image log management system includes: a processor configured to: receive a processing request for executing a process related to multiple processing target data; before the process related to the processing request is completed, generate a complete transaction record including image logs of the processing target data related to the processing request, the complete transaction record serving as the transaction record; transmit the complete transaction record to the multiple devices; in response to the process related to the processing request being aborted after the complete transaction record is transmitted to the multiple devices and before the process related to the processing request is completed, generate a partial transaction record including an image log of a processed processing target datum of the processing target data and not including an image log of an unprocessed processing target datum of the processing target data, the partial transaction record serving as the transaction record, the partial transaction record performing a function of excluding the complete transaction record from a target for the mining process in response to the transaction record pending the mining process including the complete transaction record and the partial transaction record that are related to one processing request; and transmit the partial transaction record to the multiple devices.

## Description

### Background

### (i) Technical Field

The present disclosure relates to an image log management system, an image log management program, and an image log management method.

### (ii) Related Art

To date, image datum indicating processing target datum has been recorded as an image log in processing the processing target datum.

For example, Japanese Unexamined Patent Application Publication No. 2011-28606 discloses an image forming device including a first memory provided in the image forming device and a second memory externally connected to the image forming device. In the image forming device, log information including image datum indicating a job (such as a print job or a copy job) executed in the image forming device is stored in the first memory and the second memory.

### Summary

If the image log as described above is falsified, the intrinsic function of the image log is not performed on occasions. Image logs are thus preferably managed to restrain falsification.

There is known a technology called block chain. The block chain has a structure in which data units that are blocks each having a transaction record including information to be recorded are connected like a chain. The block chain is stored in each of multiple devices (also called nodes) connected to be able to directly communicate with each other. The scheme as described above restrains a datum to be recorded from being falsified. By managing the image log with the block chain, in other words, by including an image log in the transaction record in the block included in the block chain, the image log may be restrained from being falsified.

In managing an image log with the block chain, a low frequency with which a transaction record including an image log (specifically, a block including the transaction record) is added to the block chain (referred to as an addition frequency of a transaction record in this specification) causes an issue in some cases. For example, a low speed at which the transaction record is added to the block chain causes trouble that transaction records pending a mining process are accumulated.

In particular, the data size of an image datum such as the image log is higher than a datum typically managed with the block chain (for example, a virtual currency transaction information), and thus a decrease in the transaction record addition frequency is likely to cause trouble.

Accordingly, it is an object of the present disclosure to restrain the addition frequency of a transaction record from being decreased in managing an image log with a block chain, as compared with a case where all of image logs of respective processing target data related to a received processing request are included in a block.

According to a first aspect of the present disclosure, there is provided an image log management system including multiple devices that each store a block chain including a block having a transaction record including an image log that is an image datum representing a processing target datum, each execute a mining process for adding a new block to the block chain, and are connected to be able to communicate with each other, in which the image log management system includes a processor configured to: receive a processing request for executing a process related to multiple processing target data; before the process related to the processing request is completed, generate a complete transaction record including image logs of the processing target data related to the processing request, the complete transaction record serving as the transaction record; transmit the complete transaction record to the multiple devices; in response to the process related to the processing request being aborted after the complete transaction record is transmitted to the multiple devices and before the process related to the processing request is completed, generate a partial transaction record including an image log of a processed processing target datum of the processing target data and not including an image log of an unprocessed processing target datum of the processing target data, the partial transaction record serving as the transaction record, the partial transaction record performing a function of excluding the complete transaction record from a target for the mining process in response to the transaction record pending the mining process including the complete transaction record and the partial transaction record that are related to one processing request; and transmit the partial transaction record to the multiple devices.

According to a second aspect of the present disclosure, in the image log management system according to the first aspect, the processor is configured to: in response to the transaction record pending the mining process including the complete transaction record and the partial transaction record that are related to the one processing request, exclude the complete transaction record from the target for the mining process and execute the mining process.

According to a third aspect of the present disclosure, in the image log management system according to the first or second aspect, the processor is configured to: in response to the processed processing target datum being absent when the process related to the processing request is aborted, generate a partial transaction record not including the image log.

According to a fourth aspect of the present disclosure, in the image log management system according to the second aspect, the complete transaction record and the partial transaction record includes a processing request identifier identifying the processing request and a device identifier uniquely identifying a device of the devices that receives the processing request, and the processor is configured to: in response to a processing request identifier included in the complete transaction record and a processing request identifier included in the partial transaction record being identical and a device identifier included in the complete transaction record and a device identifier included in the partial transaction record being identical, determine that the complete transaction record and the partial transaction record are related to the one processing request.

According to a fifth aspect of the present disclosure, in the image log management system according to the first aspect, the processor is configured to: in response to the process related to the processing request being aborted due to a factor other than an abortion instruction from a user, not generate the partial transaction record.

According to a sixth aspect of the present disclosure, in the image log management system according to the first or second aspect, the processor is configured to: encode the image log included in the transaction record to allow only a device of the devices that receives the processing request to decode the image log.

According to a seventh aspect of the present disclosure, there is provided a program causing a computer to execute a process for managing an image log, the computer being capable of accessing a block chain stored in each of multiple devices connected to be able to communicate with each other, the block chain including a block having a transaction record including an image log serving as an image datum representing a processing target datum. The process includes: receiving a processing request for executing a process related to multiple processing target data; before the process related to the processing request is completed, generating a complete transaction record including image logs of the processing target data related to the processing request, the complete transaction record serving as the transaction record; transmitting the complete transaction record to the multiple devices; in response to the process related to the processing request being aborted after the complete transaction record is transmitted to the multiple devices and before the process related to the processing request is completed, generating a partial transaction record including an image log of a processed processing target datum of the processing target data and not including an image log of an unprocessed processing target datum of the processing target data, the partial transaction record serving as the transaction record, the partial transaction record performing a function of excluding the complete transaction record from a target for the mining process in response to the transaction record pending the mining process including the complete transaction record and the partial transaction record that are related to one processing request; and transmitting the partial transaction record to the multiple devices.

According to an eighth aspect of the present disclosure, there is provided an image log management method for a computer capable of accessing a block chain stored in each of multiple devices connected to be able to communicate with each other, the block chain including a block having a transaction record including an image log serving as an image datum representing a processing target datum, the method including: receiving a processing request for executing a process related to multiple processing target data; before the process related to the processing request is completed, generating a complete transaction record including image logs of the processing target data related to the processing request, the complete transaction record serving as the transaction record; transmitting the complete transaction record to the multiple devices; in response to the process related to the processing request being aborted after the complete transaction record is transmitted to the multiple devices and before the process related to the processing request is completed, generating a partial transaction record including an image log of a processed processing target datum of the processing target data and not including an image log of an unprocessed processing target datum of the processing target data, the partial transaction record serving as the transaction record, the partial transaction record performing a function of excluding the complete transaction record from a target for the mining process in response to the transaction record pending the mining process including the complete transaction record and the partial transaction record that are related to one processing request; and transmitting the partial transaction record to the multiple devices.

According to any one of the first to third aspects and the seventh and eighth aspects of the present disclosure, in managing the image logs with the block chain, a decrease in the addition frequency of the transaction record may be restrained as compared with a case where the image logs of all of the processing target data related to the received processing request are included in the block.

According to the fourth aspect of the present disclosure, even if the same processing request identifier may be assigned to mutually different processing requests in each device, the complete transaction record related to the same processing request as that for the partial transaction record may be appropriately determined.

According to the fifth aspect of the present disclosure, the image log may be restrained from being excluded from the target for the mining process in a case other than the case where the user gives an instruction to abort a job.

According to the sixth aspect of the present disclosure, the confidentiality of the image log may be enhanced as compared with a case where the image log is not encoded.

### Brief Description of the Drawings

An exemplary embodiment of the present disclosure will be described in detail based on the following figures, wherein:
Fig. 1 is a schematic configuration diagram of an image log management system according to this exemplary embodiment;
Fig. 2 is a schematic configuration diagram of an image processing device according to this exemplary embodiment;
Fig. 3 is a conceptual diagram illustrating the structure of a block chain;
Fig. 4 is a conceptual diagram illustrating the content of the header of a block;
Fig. 5 is a conceptual diagram illustrating the content of a transaction record;
Fig. 6 is a conceptual diagram illustrating an example of the content of a complete transaction record;
Fig. 7 is a conceptual diagram illustrating an example of the content of a partial transaction record;
Fig. 8 is a flowchart illustrating the flow of a transaction generation process according to this exemplary embodiment; and
Fig. 9 is a flowchart illustrating the flow of a mining process according to this exemplary embodiment.

### Detailed Description

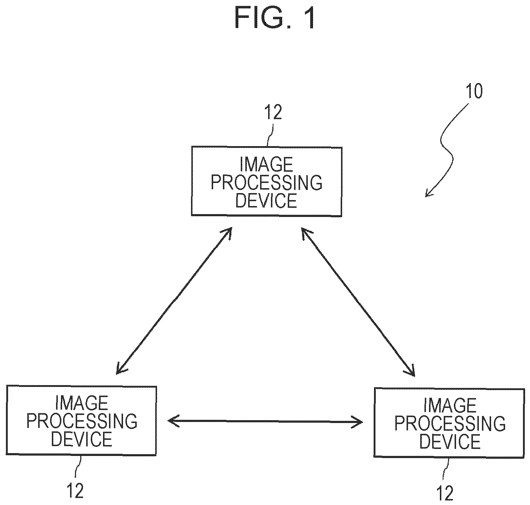

Fig. 1 is a schematic configuration diagram of an image log management system 10 according to an exemplary embodiment. The image log management system 10 includes multiple devices serving as multiple nodes in a block chain. In this exemplary embodiment, the image log management system 10 includes multiple image processing devices 12 serving as the multiple nodes in the block chain. In this specification, each image processing device 12 included in the image log management system 10 is simply referred to as the image processing device 12. The image processing device 12 is a device having a printing function, a copying function, a scanning function, a faxing function, or the like and is, for example, a multi-function printer. Fig. 1 illustrates the only three image processing devices 12 included in the image log management system 10, but the image log management system 10 may include the image processing devices 12 the number of which is more than or equal to 3.

The image processing devices 12 are connected in a peer to peer (P2P) manner to be able to communicate with each other via a communication network such as a local area network (LAN) or a wide area network (WAN). P2P is a communication method by which devices directly communicate with each other without a server.

In the image log management system 10 according to this exemplary embodiment, an image log generated in each image processing device 12 is managed with the block chain, and thereby the disappearance and falsification thereof is restrained. An image log is an image datum representing a processing target datum in the image processing device 12. For example, in a case where the image processing device 12 executes a printing process, a printing target image datum is an image log. The processing target datum is not limited to the printing target image datum. The image log is used, for example, to restrain information from leaking, trace the information, and effectively utilize the information for business. Specifically, for example, the image log is used to manage, monitor, and trace when, who, on which image processing device 12, and what kind of process is executed.

As described above, the image log tends to have a larger data size than data typically managed with the block chain such as virtual currency transaction information.

Although it will be descried in detail later, the block chain is a form of a distributed database formed in such a manner that multiple blocks are connected. The distributed database herein denotes that block chains having the same content are stored in the respective image processing devices 12. Each of the blocks constituting the block chain includes one or more transaction records serving as management targets. In this exemplary embodiment, each transaction record includes an image log. Each block includes the hash value of block information regarding a preceding block that is a block added to the block chain last time (hereinafter, conveniently expressed as a hash value of the block). The block information is information including a transaction record included in the block and the like. The hash value is a value obtained by irreversibly converting a target datum (herein, block information regarding the preceding block). Accordingly, if a transaction record included in a block disappears or is falsified, the hash values included in all of succeeding blocks are different from normal hash values. The scheme as described above restrains the transaction record (the image log in this exemplary embodiment) from disappearing or being falsified.

If it is possible to add a block to the block chain easily, a malicious user is allowed to add an invalid block (for example, a block including a falsified transaction record) to the block chain. Hence, the block chain typically has restrictions for adding a new block. As a restriction, an algorithm that is proof of work (PoW) has been proposed. PoW is a scheme by which the processor of each node of the block chain (the image processing device 12 in this exemplary embodiment) is caused to repeat calculation, and if the calculation result satisfies a predetermined condition, an addition of a new block to the block chain is permitted. In this exemplary embodiment, PoW is used as a restriction for adding a new block.

A process for adding a new block to the block chain is called a mining process. In the mining process based on PoW, the processor of the node calculates a hash value of the newest one of the blocks added to the block chain by inputting, in a hash function, a composite value obtained by combining block information regarding the block, that is, one or more transaction records included in the block, the hash value of a block preceding the block, and a nonce value. For example, the SHA-256 function is used as the hash function. If the calculated hash value is lower than a predetermined threshold (called a difficulty target), the mining process succeeds, and addition of the new block to the block chain is permitted. The hash value lower than the threshold is called a correct hash value. If the calculated hash value is higher than or equal to the threshold, the processor changes the nonce value and then calculates the hash value. Due to the characteristic of the hash function, only a slight difference of an input datum (herein, the nonce value) leads to a largely changed output hash value. As described above, with the nonce value being changed, the processor repeats calculating the hash value until the hash value becomes lower than the threshold (in other words, until the correct hash value is obtained). An enormous amount of calculation is typically required to obtain the correct hash value.

As described above, an enormous amount of calculation is required for success in the mining process. Accordingly, executing the mining process in cooperation with the multiple nodes has been proposed. A group of the nodes that execute the mining process in cooperation with each other is called a mining pool. Also in this exemplary embodiment, the multiple image processing devices 12 may form a mining pool, and thus the multiple image processing devices 12 (particularly, the processors thereof) may execute the mining process in cooperation with each other.

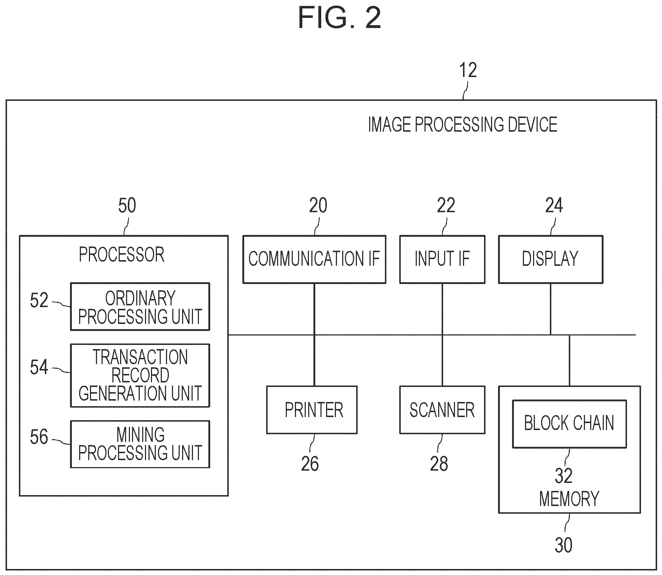

Fig. 2 is a schematic configuration diagram of each image processing device 12. The image processing device 12 executes a printing process, a scanning process, a copying process, a faxing process, and the like as intrinsic processes of the image processing device 12. In this specification, the intrinsic processes of the image processing device 12 as described above are each referred to as an ordinary process. The image processing device 12 in this exemplary embodiment executes not only the ordinary process but also the mining process. Since the image processing device 12 included in the image log management system 10 has the mutually same configuration, one of the image processing devices 12 is herein described.

A communication interface (IF) 20 is composed of, for example, a network adapter. The communication IF 20 performs a function of communicating with different devices via a communication network. In particular, in this exemplary embodiment, the communication IF 20 performs a function of communicating with the other image processing devices 12 in a P2P manner.

An input IF 22 is composed of, for example, buttons or a touch panel. The input IF 22 is used when a user inputs an instruction to the image processing device 12.

A display 24 is composed of, for example, a liquid crystal display or an organic electro luminescence (EL) display. On the display 24, various screens are displayed depending on the instruction from a processor 50 (described later).

A printer 26 is, for example, a laser printer or an inkjet printer and is a mechanism by which a printing process for forming an image on a printing medium such as paper is executed on the basis of an input print job. In a case where the printer 26 is a laser printer, the printer 26 is composed of, for example, a photoconductor drum, a charging roller, a transfer roller, a fixing roller, and toner. In a case where the printer 26 is an inkjet printer, the printer 26 is composed of a nozzle, a charging electrode plate, a deflecting electrode plate, ink, and other components.

A scanner 28 is composed of a light source, an image sensor such as a charge-coupled device (CCD), and the like. The scanner 28 is a mechanism by which a scanning process for acquiring image data by optically reading a paper medium is executed.

A memory 30 includes a hard disk drive (HDD), an embedded multimedia card (eMMC), a read only memory (ROM), a random access memory (RAM), or the like. The memory 30 stores an image log management program for operating the components of the image processing device 12. The image log management program may be stored in a non-transitory computer readable storage medium such as a universal serial bus (USB) memory or a SD card. The image processing device 12 is capable of reading the image log management program from such a storage medium and running the program. The memory 30 also stores a block chain 32 as illustrated in Fig. 2.

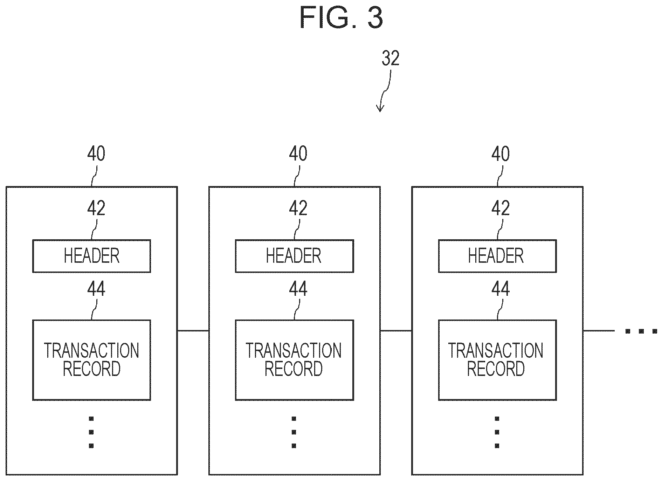

Fig. 3 is a conceptual diagram illustrating the structure of the block chain 32. As described above, the block chain 32 has a structure in which multiple blocks 40 are connected. Each block 40 includes a header 42 and a transaction record 44.

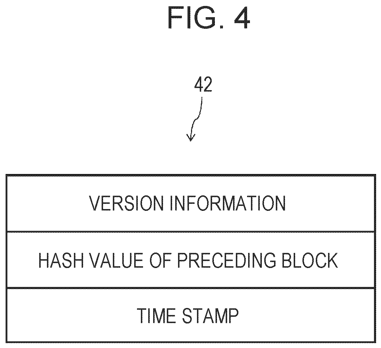

Fig. 4 is a conceptual diagram illustrating the content of the header 42 included in the block 40. As illustrated in Fig. 4, in this exemplary embodiment, the header 42 includes version information, the hash value of a preceding block 40, and a time stamp. The version information is information indicating the version of software or a protocol related to the block chain 32. The hash value of the preceding block 40 is a correct hash value calculated when the preceding block 40 is added to the block chain 32. The time stamp is information indicating time when the block 40 is added to the block chain 32. How the header 42 is generated and how information included in the header 42 is used will be described later.

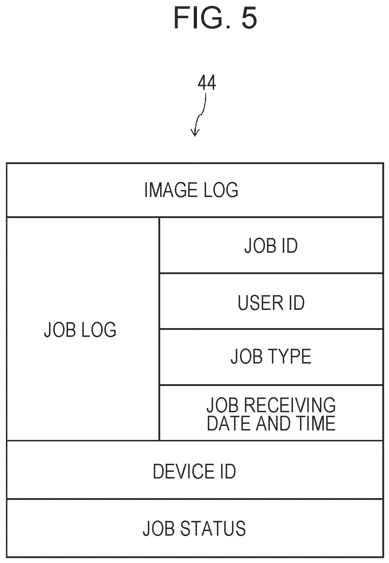

Fig. 5 is a conceptual diagram illustrating the content of a transaction record 44 included in the each block 40. As illustrated in Fig. 5, in this exemplary embodiment, the transaction record 44 includes an image log, a job log that is information regarding a job related to the image log, a device ID serving as a device identifier, and a job status that is information indicating the type of the transaction record 44. The image log is an image datum representing a processing target datum in the image processing device 12, as described above. The job log includes information indicating, for example, a job ID serving as a processing request identifier identifying a job, a user ID uniquely identifying a user who executes the job, the type of the job (such as printing, scanning, copying, or faxing), and the date and time when the job is received. The device ID is an identifier uniquely identifying the image processing device 12 that receives the job and executes a process related to the job (that is, related to the image log included in the transaction record 44). The job status will be described later.

Referring back to Fig. 2, the processor 50 is composed of, for example, a central processing unit (CPU). The processor 50 is connected to the communication IF 20, the input IF 22, the display 24, the printer 26, the scanner 28, and the memory 30 via a data bus to be able to communicate with the components. The image log management program stored in the memory 30 causes the processor 50 to perform functions as an ordinary processing unit 52, a transaction record generation unit 54, and a mining processing unit 56.

The ordinary processing unit 52 and the transaction record generation unit 54 mainly perform functions related to the generation and transmission of the transaction record 44 to be included in the block 40.

The ordinary processing unit 52 performs control to execute an ordinary process on the basis of a job serving as a processing instruction input to the image processing device 12 by the user. For example, in response to receiving a print job from the user, the ordinary processing unit 52 causes the printer 26 to execute a printing process. For example, in response to receiving a scan job from the user, the ordinary processing unit 52 causes the scanner 28 to execute a scanning process. As described above, the ordinary processing unit 52 receives jobs for causing the image processing device 12 to execute processes related to multiple processing target data (for example, an image datum regarding a printing target for the print job and an image datum acquired in the scanning process for the scan job). Specifically, the ordinary processing unit 52 receives a job from the user via the communication IF 20 and thereafter authenticates the user. If the authenticated user gives an instruction, the ordinary processing unit 52 executes a process related to the job.

The transaction record generation unit 54 generates a transaction record 44 including an image log. In this exemplary embodiment, after the image processing devices 12 each receive a job, the transaction record generation units 54 generate the transaction records 44 of mutually different types at mutually different timings. Hereinafter, the details of a process for generating a transaction record 44 by the transaction record generation unit 54 will be described.

After one of the image processing devices 12 receives a job, and before the process related to the job is completed, the transaction record generation unit 54 thereof generates a transaction record 44 including an image log of a processing target datum related to the job. In this specification, the transaction record 44 as described above is referred to as a complete transaction record. In this exemplary embodiment, the transaction record generation unit 54 generates a complete transaction record including image logs of all of the processing target data related to the job. In addition, in this exemplary embodiment, the transaction record generation unit 54 starts generating the complete transaction record, and at the same time, the ordinary processing unit 52 starts the process related to the job.

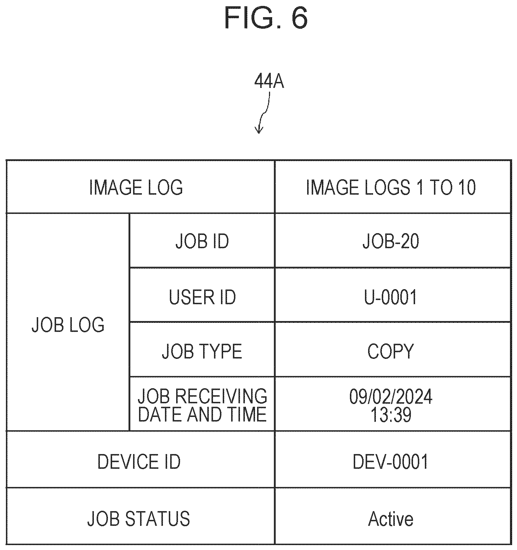

Fig. 6 is a view illustrating an example of the content of a complete transaction record 44A. For example, if the image processing device 12 receives a copy job for an instruction to copy ten pages, the transaction record generation unit 54 generates ten image logs (image logs 1 to 10) corresponding to the ten pages.

The transaction record generation unit 54 desirably encode the image logs to allow only the image processing device 12 that receives the job related to the image logs to decode the image logs. As a specific approach to the encoding as described above, for example, a known approach such as a public key cryptosystem is usable. In this exemplary embodiment, the image logs are managed with the block chain 32. If the image logs are managed with the block chain 32, it is meant that every image log is broadcasted to the multiple devices included in the block chain system (the image processing devices 12 in this exemplary embodiment) and each device enters into a state where any one allowed to access the block chain 32 may view the image log. In contrast, the image log has not typically been disclosed to date from the viewpoint of security or the like. From this point, in this exemplary embodiment, the image log is encoded to allow only the image processing device 12 that receives the job related to the image log to decode the image log.

The transaction record generation unit 54 also acquires the job log of the job and a device ID. Specifically, the job ID is decided by the transaction record generation unit 54 appropriately. The user ID and the job type may be acquired from the received job. The job receiving date and time may also be acquired from a time measuring function provided to the image processing device 12. The device ID may be stored in advance in the memory 30, and the transaction record generation unit 54 may acquire its own device ID by reading out the device ID from the memory 30.

The transaction record generation unit 54 generates a complete transaction record 44A including the above-described information.

Further, the transaction record generation unit 54 assigns, to the complete transaction record 44A, the job status that is information indicating the type of the transaction record 44. In this exemplary embodiment, the transaction record generation unit 54 assigns the information "Active" as the job status. The job status "Active" means that the transaction record 44 is a complete transaction record 44A.

The transaction record generation unit 54 broadcasts the generated complete transaction record 44A to the other image processing devices 12 included in the image log management system 10. Each image processing device 12 stores, in the memory 30 in an accumulated manner, the complete transaction record 44A acquired from one of the multiple image processing devices 12 included in the image log management system 10 (including the image processing device 12 itself).

In this exemplary embodiment, generating the complete transaction record 44A related to the job and broadcasting the complete transaction record 44A to the other image processing devices 12 serve as a processing completion condition. Accordingly, if the complete transaction record 44A is not broadcasted for some reason or other, the ordinary processing unit 52 does not complete the execution of the job (aborts the job). This is performed to restrain the occurrence of a situation that the process related to the job is executed in the image processing device 12 but an image log related to the job is not recorded.

In some cases, a process related to the job input to the image processing device 12 is aborted in the course of the process. If the process related to the job is aborted, the transaction record generation unit 54 generates a transaction record 44 of a type different from the complete transaction record 44A.

Specifically, in response to the process related to the job being aborted after the complete transaction record 44A related to the job is broadcasted to the multiple image processing devices 12 and before the process related to the job is completed, the transaction record generation unit 54 generates a transaction record 44 including the image log of a processing target processed until then and not including the image log of an unprocessed processing target datum. In this specification, the transaction record 44 as described above is referred to as a partial transaction record.

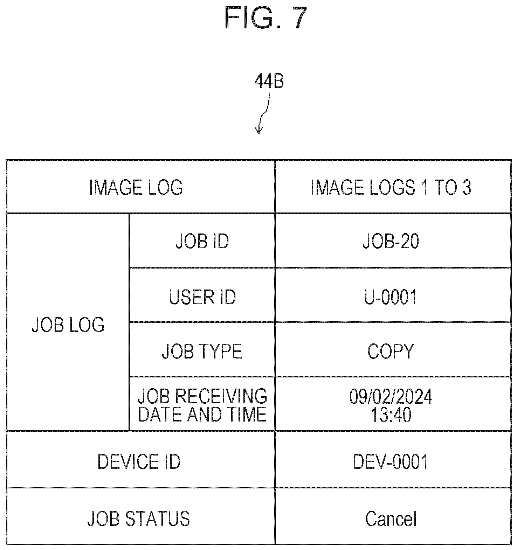

Fig. 7 is a view illustrating an example of the content of a partial transaction record 44B. For example, assume a case where the ordinary processing unit 52 starts executing a process related to a copy job related to an instruction to copy ten pages, processing steps up to the third page is completed, and then the process related to the copy job is aborted. In this case, the transaction record generation unit 54 generates three image logs (image logs 1 to 3) corresponding to the three processed pages. In contrast, the transaction record generation unit 54 does not generate image logs corresponding to the four to ten unprocessed pages.

The transaction record generation unit 54 also desirably encodes the image logs to allow, to decode the image logs, only the image processing device 12 that receives the job related to the image logs.

A case where when the process related to the job is aborted, there is not any processed processing target datum is conceivable. For example, the case is a case where the ordinary processing unit 52 starts executing the process related to the copy job as the instruction to copy ten pages but the process related to the copy job is aborted before a processing step for the first page is completed. In this case, the transaction record generation unit 54 does not generate the image logs. In this case, the transaction record generation unit 54 thus generates a partial transaction record 44B not including an image log.

The transaction record generation unit 54 also acquires the job log of the job and the device ID. How to acquire these is the same as in the case of the complete transaction record 44A, and thus description thereof is omitted.

The transaction record generation unit 54 generates a partial transaction record 44B including the above-described information.

Further, the transaction record generation unit 54 assigns a job status to the partial transaction record 44B. In this exemplary embodiment, the transaction record generation unit 54 assigns the information "Cancel" as the job status. The job status "Cancel" means that the transaction record 44 is a partial transaction record 44B.

If there are the complete transaction record 44A and the partial transaction record 44B that are related to the same job in the transaction records 44 pending the mining process, the partial transaction record 44B performs a function of excluding the complete transaction record 44A from the mining process targets. This will be descried in detail later.

If the process related to the job is aborted due to a factor other than an abortion instruction from the user, the transaction record generation unit 54 desirably does not generate a partial transaction record 44B. An example of the case where the process related to the job is aborted due to a factor other than an abortion instruction from the user who inputs the job in the image processing device 12 is a case where the occurrence of a malfunction of the image processing device 12 prevents the process related to the job from being continued. In such a case, the user does not wish the process related to the job, and the remaining processing steps related to the job are resumed on occasions due to recovery or the like from the malfunction of the image processing device 12. As described above, the partial transaction record 44B performs the function of not recording an image log included in the complete transaction record 44A related to the same job. Assume that the process related to the job is aborted due to a factor other than an abortion instruction from the user who inputs the job in the image processing device 12 and that the partial transaction record 44B is then generated. In this case, if the process related to the job is resumed and completed, one or more image logs indicating part of processing target data related to the job (one or more processing target data processed after the resumption) are not recorded. To prevent such an event, if the process related to the job is aborted due to a factor other than an abortion instruction from the user who requests the process related to the job, the transaction record generation unit 54 desirably does not generate the partial transaction record 44B.

The transaction record generation unit 54 broadcasts the generated partial transaction record 44B to the other image processing devices 12 included in the image log management system 10. Each image processing device 12 stores, in the memory 30 in an accumulated manner, the partial transaction record 44B acquired from one of the multiple image processing devices 12 included in the image log management system 10 (including the image processing device 12 itself).

The mining processing unit 56 performs a function related to the mining process for the block 40 including a transaction record 44 pending the mining process (that is, yet to be added to the block chain 32), the transaction record 44 being transmitted from the image processing device 12 including the mining processing unit 56 or a different image processing device 12.

The mining processing unit 56 executes the mining process for the block 40 including the transaction record 44 pending the mining process at predetermined timing (for example, when the number of the transaction records 44 pending the mining process accumulated in the memory 30 reaches a predetermined number or at predetermined time intervals). As described above, in this exemplary embodiment, the mining processing unit 56 executes the mining process in cooperation with the mining processing units 56 of the other image processing devices 12; however, the mining processing unit 56 of one image processing device 12 may execute the mining process on its own.

The mining processing unit 56 executes the mining process as described above. That is, the mining processing unit 56 calculates the hash value as a composite value obtained by combining one or more transaction records 44 pending the mining process, the hash value of the preceding block 40, and a nonce. If a condition that the hash value as the result of the mining process is lower than a predetermined threshold is satisfied, the mining process succeeds. The mining processing unit 56 repeats calculating the hash value with the nonce being changed until a correct hash value is obtained.

If the mining process succeeds, the mining processing unit 56 generates the header 42 (see Fig. 4). Specifically, the mining processing unit 56 acquires the version of software or a protocol related to the block chain 32 and uses this as version information. The mining processing unit 56 also acquires the hash value of the preceding block 40 and includes the hash value in the header 42. The mining processing unit 56 also acquires time when the block 40 serving as a target for the mining process is added to the block chain 32 and uses the time as a time stamp.

The mining processing unit 56 forms a new block 40 including the generated header 42 and the transaction record 44 (see Fig. 5) serving as the target for the mining process. The mining processing unit 56 then adds the formed new block 40 to the block chain 32 and broadcasts the new block 40 to the other image processing devices 12 included in the image log management system 10. Each of the other image processing devices 12 adds the received new block 40 to the block chain 32 stored in the image processing device 12.

In this exemplary embodiment, a transaction record 44 may include a complete transaction record 44A and a partial transaction record 44B. If transaction records 44 pending the mining process include a complete transaction record 44A and a partial transaction record 44B that are related to the same job, the mining processing unit 56 excludes the complete transaction record 44A from the targets for the mining process and executes the mining process.

First, the mining processing unit 56 determines whether the transaction records 44 pending the mining process include a partial transaction record 44B. As described above, whether a transaction record 44 is a complete transaction record 44A or a partial transaction record 44B may be discriminated by referring to the job status included in the transaction record 44.

If the transaction records 44 pending the mining process include a partial transaction record 44B, the mining processing unit 56 identifies the complete transaction record 44A related to the same job as that for the partial transaction record 44B. In this exemplary embodiment, if the job ID included in the complete transaction record 44A and the job ID included in the partial transaction record 44B are identical, and if the device ID included in the complete transaction record 44A and the device ID included in the partial transaction record 44B are identical, the mining processing unit 56 determines that the complete transaction record 44A and the partial transaction record 44B are related to the same job.

If the job ID included in the complete transaction record 44A and the job ID included in the partial transaction record 44B are identical, and if a job ID uniquely identifies a job in the entire image log management system 10, the mining processing unit 56 may determine that the complete transaction record 44A and the partial transaction record 44B are related to the same job. The image processing devices 12 possibly assign the same job ID to jobs input to the respective different image processing devices 12. Accordingly, to reliably identify the job, in this exemplary embodiment, it is determined that the complete transaction record 44A and the partial transaction record 44B are related to the same job if the complete transaction record 44A and the partial transaction record 44B have the same job ID and the same device ID.

For example, the transaction records 44 pending the mining process include the complete transaction record 44A illustrated in Fig. 6 and the partial transaction record 44B illustrated in Fig. 7. It is determined that the complete transaction record 44A and the partial transaction record 44B are related to the same job because of the same job ID and the same device ID. The mining processing unit 56 thus excludes the complete transaction record 44A from the targets for the mining process. The mining processing unit 56 thereby forms a new block 40 including the partial transaction record 44B and not including the complete transaction record 44A and adds the formed new block 40 to the block chain 32. That is, the complete transaction record 44A is not managed with the block chain 32. The complete transaction record 44A may be deleted later.

As described above, the complete transaction record 44A is generated before the process related to the job is completed and includes the image logs of the processing target data related to the job (for example, all of the processing target data related to the job). That is, the complete transaction record 44A is generated regardless of whether all of steps of the process related to the job are actually performed. In contrast, the partial transaction record 44B is generated if the process related to the job is aborted. The partial transaction record 44B includes one or more image logs of the one or more processing target data processed until the abortion and does not include one or more image logs of one or more unprocessed processing target data.

In the related art, the partial transaction record 44B is not generated in response to the abortion of the process related to the job, and the complete transaction record 44A is to undergo the mining process despite the abortion of the process related to the job. In such a case, the complete transaction record 44A including the image log of a processing target datum not actually processed undergoes the mining process. With reference to the examples in Figs. 6 and 7, the mining process is actually executed up to the third page, and thus only the image logs 1 to 3 are required as the image logs. However, the complete transaction record 44A including even the image logs 4 to 10 that are originally not required are to undergo the mining process.

If the transaction record 44 includes the unnecessary image logs, the data size of the transaction record 44 increases unnecessarily. The frequency with which the transaction record 44 is added to the block chain 32 thus decreases.

In this exemplary embodiment, the complete transaction record 44A is excluded from the targets for the mining process, and the partial transaction record 44B related to the same job for the complete transaction record 44A is to undergo the mining process. The partial transaction record 44B does not include the unnecessary image logs, that is, the image logs of a processing target data actually not processed, and thus the data size thereof is smaller than at least the complete transaction record 44A. According to this exemplary embodiment, the addition frequency of the transaction record 44 may be restrained from decreasing.

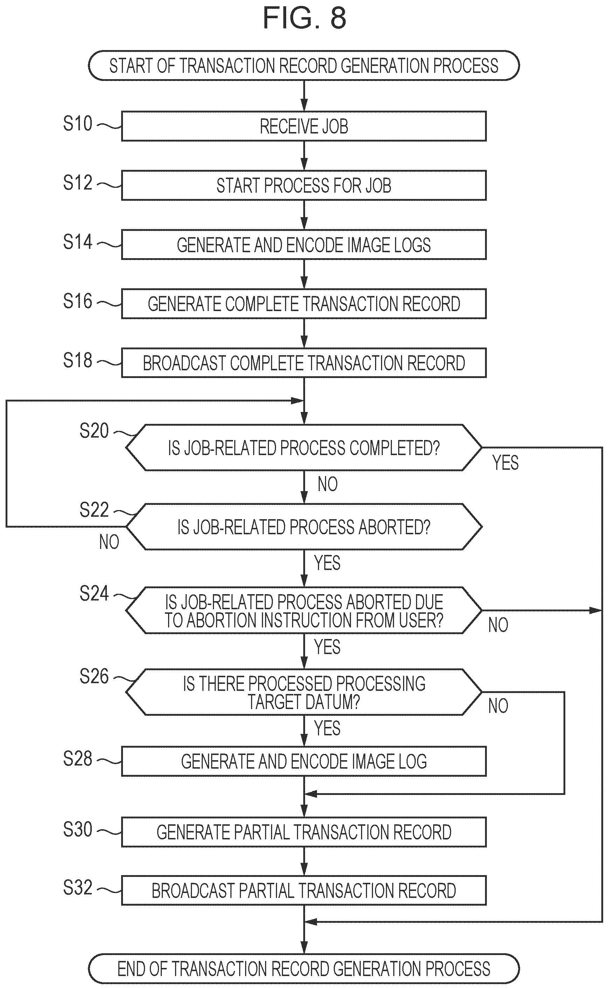

The overview of the image log management system 10 according to this exemplary embodiment has heretofore been described. Hereinafter, the flow of a transaction record generation process will be described in accordance with a flowchart illustrated in Fig. 8.

In step S10, one of the image processing devices 12 receives a job from the user.

In step S12, the ordinary processing unit 52 starts a process related to the job received in step S10.

In step S14, the transaction record generation unit 54 generates the image logs of all of the processing target data related to the job received in step S10. Further, the transaction record generation unit 54 encodes each generated image log to allow only the image processing device 12 to decode the image log.

In step S16, the transaction record generation unit 54 generates a complete transaction record 44A including the image logs generated and encoded in step S14, a job log, a device ID, and "Active" as a job status (see Fig. 6).

In step S18, the transaction record generation unit 54 broadcasts the complete transaction record 44A generated in step S16 to the other image processing devices 12 included in the image log management system 10.

In step S20, the transaction record generation unit 54 determines whether the process related to the job started in step S12 is completed. If the process related to the job is completed, the process is terminated. While the process related to the job is continuing, the transaction record generation unit 54 proceeds to step S22.

In step S22, the transaction record generation unit 54 determines whether the process related to the job started in step S12 is aborted. While the process related to the job is not aborted, the transaction record generation unit 54 returns to step S20. The transaction record generation unit 54 repeats steps S20 and S22 until the process related to the job is completed or aborted. If the process related to the job is aborted, the transaction record generation unit 54 proceeds to step S24.

In step S24, the transaction record generation unit 54 determines whether the process related to the job is aborted due to an abortion instruction from the user. If the process related to the job is aborted due to a factor other than the abortion instruction from the user, the transaction record generation unit 54 terminates the process. If the process related to the job is aborted due to an abortion instruction from the user, the transaction record generation unit 54 proceeds to step S26.

In step S26, the transaction record generation unit 54 determines whether there is a processed processing target datum. If there is a processed processing target datum, the transaction record generation unit 54 proceeds to step S28. If there is not a processed processing target datum, the transaction record generation unit 54 skips step S28 and proceeds to step S30.

In step S28, the transaction record generation unit 54 generates an image log of the processed processing target datum. Further, the transaction record generation unit 54 encodes the generated image log to allow only the image processing device 12 to decode the image log.

In step S30, the transaction record generation unit 54 generates a partial transaction record 44B including the image log generated and encoded in step S28, a job log, a device ID, and "Cancel" as the job status (see Fig. 7).

In step S32, the transaction record generation unit 54 broadcasts the partial transaction record 44B generated in step S30 to the other image processing devices 12 included in the image log management system 10.

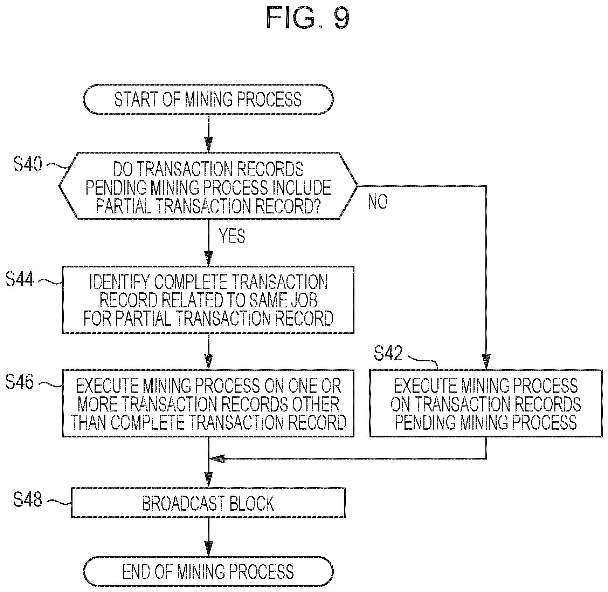

Hereinafter, the flow of a mining process will be described in accordance with a flowchart illustrated in Fig. 9.

In step S40, the mining processing unit 56 determines whether the transaction records 44 pending the mining process include a partial transaction record 44B. If the transaction records 44 do not include a partial transaction record 44B, the mining processing unit 56 proceeds to step S42.

In step S42, the mining processing unit 56 executes the mining process on the transaction records 44 pending the mining process (in this case, all of the transaction records 44 pending the mining process are the complete transaction records 44A) and forms a new block 40 including the transaction records 44.

If it is determined that the transaction records 44 pending the mining process include a partial transaction record 44B in step S40, the mining processing unit 56 proceeds to step S44.

In step S44, the mining processing unit 56 identifies the complete transaction record 44A related to the same job for the partial transaction record 44B. As described above, in this exemplary embodiment, if the job ID included in the complete transaction record 44A and the job ID included in the partial transaction record 44B are identical, and if the device ID included in the complete transaction record 44A and the device ID included in the partial transaction record 44B are identical, the mining processing unit 56 determines that the complete transaction record 44A and the partial transaction record 44B are related to the same job.

In step S46, the mining processing unit 56 excludes the complete transaction record 44A identified in step S44 from the targets for the mining process, executes the mining process on the one or more transaction records 44 pending the mining process including the partial transaction record 44B found in step S40, and forms a new block 40 including the one or more transaction records 44.

In step S48, the mining processing unit 56 adds the new block 40 formed in step S42 or S46 to the block chain 32 and broadcasts the new block 40 to the other image processing devices 12 included in the image log management system 10.

The exemplary embodiment according to the present disclosure has heretofore been described. However, the present disclosure is not limited to the exemplary embodiment described above, and various modifications may be made without departing from the spirit of the present disclosure.

In this exemplary embodiment, the processing steps are performed by any computer. The computer may perform the processing steps by using a processor serving as hardware, a program serving as software, or combination of these. In this case, a processor is configured to perform various processing steps in this exemplary embodiment in cooperation with the program and may function as a unit or means in this exemplary embodiment. The order in which the processor performs the processing steps is not limited to the described order and may be changed appropriately. The computer may be a general purpose computer, an application specific computer, a workstation, or another system capable of performing the various processing steps.

The processor may be composed of one or more pieces of hardware, and the type of the hardware is not limited. For example, the processor may be composed of hardware such as a central processing unit (CPU), a micro processing unit (MPU), a programmable logic device such as a field programmable gate array (FPGA), a dedicated circuit for performing specific processing such as an application specific integrated circuit (ASIC), a graphic processing unit (GPU), or a neural processing unit (NPU). Regarding the type of the hardware, different types of hardware may be combined. If multiple pieces of hardware are configured to perform one or more processing steps by a processor, the multiple pieces of hardware may be present in apparatuses physically away from each other and may be present in one apparatus. In each of exemplary embodiments, the order in which the processor performs the processing steps is not limited to the order described above and may be changed appropriately. The hardware is composed of electric circuitry in which circuit elements such as semiconductor devices are combined, or the like.

Further, the program may be firmware or software such as microcode. The program may be, for example, a program module group, and the functions thereof may be implemented by processors configured to implement the respective functions. The program may be program code or multiple code segments stored in one or more non-transitory computer readable media (for example, a storage medium or another storage). The program may be stored in a divided manner in multiple non-transitory computer readable media present in apparatuses physically away from each other. The program code or the code segments may represent a procedure, a function, a subprogram, a routine, a subroutine, a module, a software package, a class, or any combination of instructions, data structures, or program statements. The program code or the code segment may be connected to another code segment or a hardware circuit by transmitting and/or receiving information, data, an argument, a parameter, or memory content.

The present disclosure is applicable to a program and a program product.

The foregoing description of the exemplary embodiments of the present disclosure has been provided for the purposes of illustration and description. It is not intended to be exhaustive or to limit the disclosure to the precise forms disclosed. Obviously, many modifications and variations will be apparent to practitioners skilled in the art. The embodiments were chosen and described in order to best explain the principles of the disclosure and its practical applications, thereby enabling others skilled in the art to understand the disclosure for various embodiments and with the various modifications as are suited to the particular use contemplated. It is intended that the scope of the disclosure be defined by the following claims and their equivalents.

### Appendix

(((1))) An image log management system includes multiple devices that each store a block chain including a block having a transaction record including an image log that is an image datum representing a processing target datum, each execute a mining process for adding a new block to the block chain, and are connected to be able to communicate with each other. The image log management system includes:
   a processor configured to:
   receive a processing request for executing a process related to multiple processing target data;
   before the process related to the processing request is completed, generate a complete transaction record including image logs of the processing target data related to the processing request, the complete transaction record serving as the transaction record;
   transmit the complete transaction record to the multiple devices;
   in response to the process related to the processing request being aborted after the complete transaction record is transmitted to the multiple devices and before the process related to the processing request is completed, generate a partial transaction record including an image log of a processed processing target datum of the processing target data and not including an image log of an unprocessed processing target datum of the processing target data, the partial transaction record serving as the transaction record, the partial transaction record performing a function of excluding the complete transaction record from a target for the mining process in response to the transaction record pending the mining process including the complete transaction record and the partial transaction record that are related to one processing request; and
   transmit the partial transaction record to the multiple devices.
(((2))) In the image log management system according to (((1)),
   the processor is configured to:
   in response to the transaction record pending the mining process including the complete transaction record and the partial transaction record that are related to the one processing request, exclude the complete transaction record from the target for the mining process and execute the mining process.
(((3))) In the image log management system according to (((1))) or (((2))),
   the processor is configured to:
   in response to the processed processing target datum being absent when the process related to the processing request is aborted, generate a partial transaction record not including the image log.
(((4))) In the image log management system according to (((2))),
   the complete transaction record and the partial transaction record includes a processing request identifier identifying the processing request and a device identifier uniquely identifying a device of the devices that receives the processing request, and
   the processor is configured to:
      in response to a processing request identifier included in the complete transaction record and a processing request identifier included in the partial transaction record being identical and a device identifier included in the complete transaction record and a device identifier included in the partial transaction record being identical, determine that the complete transaction record and the partial transaction record are related to the one processing request.
(((5))) In the image log management system according to (((1))),
   the processor is configured to:
   in response to the process related to the processing request being aborted due to a factor other than an abortion instruction from a user, not generate the partial transaction record.
(((6))) In the image log management system according to (((1))) or (((2))),
   the processor is configured to:
   encode the image log included in the transaction record to allow only a device of the devices that receives the processing request to decode the image log.
(((7))) An image log management program causes a computer to execute a process, the computer being capable of accessing a block chain stored in each of multiple devices connected to be able to communicate with each other, the block chain including a block having a transaction record including an image log serving as an image datum representing a processing target datum, the process including:
   receiving a processing request for executing a process related to multiple processing target data;
   before the process related to the processing request is completed, generating a complete transaction record including image logs of the processing target data related to the processing request, the complete transaction record serving as the transaction record;
   transmitting the complete transaction record to the multiple devices;
   in response to the process related to the processing request being aborted after the complete transaction record is transmitted to the multiple devices and before the process related to the processing request is completed, generating a partial transaction record including an image log of a processed processing target datum of the processing target data and not including an image log of an unprocessed processing target datum of the processing target data, the partial transaction record serving as the transaction record, the partial transaction record performing a function of excluding the complete transaction record from a target for the mining process in response to the transaction record pending the mining process including the complete transaction record and the partial transaction record that are related to one processing request; and
   transmitting the partial transaction record to the multiple devices.

According to (((1))) to (((3))) or (((7))) in the disclosure, in managing the image logs with the block chain, a decrease in the addition frequency of the transaction record may be restrained as compared with a case where the image logs of all of the processing target data related to the received processing request are included in the block.

According to (((4))) in the disclosure, even if the same processing request identifier may be assigned to mutually different processing requests in each device, the complete transaction record related to the same processing request as that for the partial transaction record may be appropriately determined.

According to (((5))) in the disclosure, the image log may be restrained from being excluded from the target for the mining process in a case other than the case where the user gives an instruction to abort a job.

According to (((6))) in the disclosure, the confidentiality of the image log may be enhanced as compared with a case where the image log is not encoded.

## Claims

1. An image log management system including a plurality of devices that each store a block chain including a block having a transaction record including an image log that is an image datum representing a processing target datum, each execute a mining process for adding a new block to the block chain, and are connected to be able to communicate with each other, the image log management system comprising:
a processor configured to:
receive a processing request for executing a process related to a plurality of processing target data;
before the process related to the processing request is completed, generate a complete transaction record including image logs of the processing target data related to the processing request, the complete transaction record serving as the transaction record;
transmit the complete transaction record to the plurality of devices;
in response to the process related to the processing request being aborted after the complete transaction record is transmitted to the plurality of devices and before the process related to the processing request is completed, generate a partial transaction record including an image log of a processed processing target datum of the processing target data and not including an image log of an unprocessed processing target datum of the processing target data, the partial transaction record serving as the transaction record, the partial transaction record performing a function of excluding the complete transaction record from a target for the mining process in response to the transaction record pending the mining process including the complete transaction record and the partial transaction record that are related to one processing request; and
transmit the partial transaction record to the plurality of devices.

2. The image log management system according to claim 1,
wherein the processor is configured to:
in response to the transaction record pending the mining process including the complete transaction record and the partial transaction record that are related to the one processing request, exclude the complete transaction record from the target for the mining process and execute the mining process.

3. The image log management system according to claim 1 or 2,
wherein the processor is configured to:
in response to the processed processing target datum being absent when the process related to the processing request is aborted, generate a partial transaction record not including the image log.

4. The image log management system according to claim 2,
wherein the complete transaction record and the partial transaction record includes a processing request identifier identifying the processing request and a device identifier uniquely identifying a device of the devices that receives the processing request, and
wherein the processor is configured to:
in response to a processing request identifier included in the complete transaction record and a processing request identifier included in the partial transaction record being identical and a device identifier included in the complete transaction record and a device identifier included in the partial transaction record being identical, determine that the complete transaction record and the partial transaction record are related to the one processing request.

5. The image log management system according to claim 1,
wherein the processor is configured to:
in response to the process related to the processing request being aborted due to a factor other than an abortion instruction from a user, not generate the partial transaction record.

6. The image log management system according to claim 1 or 2,
wherein the processor is configured to:
encode the image log included in the transaction record to allow only a device of the devices that receives the processing request to decode the image log.

7. An image log management program causing a computer to execute a process, the computer being capable of accessing a block chain stored in each of a plurality of devices connected to be able to communicate with each other, the block chain including a block having a transaction record including an image log serving as an image datum representing a processing target datum, the process comprising:
receiving a processing request for executing a process related to a plurality of processing target data;
before the process related to the processing request is completed, generating a complete transaction record including image logs of the processing target data related to the processing request, the complete transaction record serving as the transaction record;
transmitting the complete transaction record to the plurality of devices;
in response to the process related to the processing request being aborted after the complete transaction record is transmitted to the plurality of devices and before the process related to the processing request is completed, generating a partial transaction record including an image log of a processed processing target datum of the processing target data and not including an image log of an unprocessed processing target datum of the processing target data, the partial transaction record serving as the transaction record, the partial transaction record performing a function of excluding the complete transaction record from a target for the mining process in response to the transaction record pending the mining process including the complete transaction record and the partial transaction record that are related to one processing request; and
transmitting the partial transaction record to the plurality of devices.

8. An image log management method for a computer capable of accessing a block chain stored in each of a plurality of devices connected to be able to communicate with each other, the block chain including a block having a transaction record including an image log serving as an image datum representing a processing target datum, the method comprising:
receiving a processing request for executing a process related to a plurality of processing target data;
before the process related to the processing request is completed, generating a complete transaction record including image logs of the processing target data related to the processing request, the complete transaction record serving as the transaction record;
transmitting the complete transaction record to the plurality of devices;
in response to the process related to the processing request being aborted after the complete transaction record is transmitted to the plurality of devices and before the process related to the processing request is completed, generating a partial transaction record including an image log of a processed processing target datum of the processing target data and not including an image log of an unprocessed processing target datum of the processing target data, the partial transaction record serving as the transaction record, the partial transaction record performing a function of excluding the complete transaction record from a target for the mining process in response to the transaction record pending the mining process including the complete transaction record and the partial transaction record that are related to one processing request; and
transmitting the partial transaction record to the plurality of devices.
